(19) Europäisches Patentamt
European Patent Office
Office européen des brevets

(11) EP 3 587 468 B1

(12) **EUROPEAN PATENT SPECIFICATION**

(45) Date of publication and mention of the grant of the patent:
**20.01.2021 Bulletin 2021/03**

(21) Application number: **19181637.0**

(22) Date of filing: **21.06.2019**

(51) Int Cl.:
***C08G 18/75*** (2006.01) ***C08G 18/73*** (2006.01)
***C08G 18/44*** (2006.01) ***C08G 18/34*** (2006.01)
***C08G 18/24*** (2006.01) ***C08G 18/08*** (2006.01)
***C08G 18/66*** (2006.01) ***C08G 64/02*** (2006.01)
***C09D 175/06*** (2006.01) ***C08G 18/10*** (2006.01)

# (54) POLYCARBONATE DIOL

POLYCARBONATDIOL

POLYCARBONATE DIOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2018 JP 2018118208**
**20.06.2019 JP 2019114705**

(43) Date of publication of application:
**01.01.2020 Bulletin 2020/01**

(73) Proprietor: **Asahi Kasei Kabushiki Kaisha**
**Tokyo 1000006 (JP)**

(72) Inventor: **Ueno, Eizaburou**
**Tokyo, 100-0006 (JP)**

(74) Representative: **Strehl Schübel-Hopf & Partner**
**Maximilianstrasse 54**
**80538 München (DE)**

(56) References cited:
**WO-A1-2014/069563**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 587 468 B1

## Description

BACKGROUND OF THE INVENTION

Field of the Invention

The present invention relates to a polycarbonate diol.

Description of the Related Art

A polycarbonate diol is known as, for example, a material excellent in hydrolysis resistance, light stability, oxidative degradation resistance, and heat resistance, which makes a soft segment in polyurethanes and thermoplastic elastomers, and used as a component of surface treatment agents for synthetic leather or artificial leather, or as a component of film coating agents. For example, as a coating agent for artificial leather or as the surface layer thereof, an aqueous polyurethane resin dispersion containing polyester polycarbonate polyol having an alicyclic structure in the main chain is disclosed (for example, refer to International Publication No. WO 2016/039395). Also, as a surface treatment agent for artificial leather or synthetic leather, an aqueous polyurethane resin emulsion composition made from a polycarbonate diol containing polyester polyol obtained by ring-opening addition polymerization of a cyclic ester compound is disclosed (for example, refer to Japanese Patent Laid-Open No. 2016-44240). A biaxially stretched polyester film having a coating layer containing a polyurethane resin containing polycarbonate polyol as a component at least on one face of the film is disclosed (for example, refer to International Publication No. WO 2010/041408).

In the art described in International Publication No. WO 2016/039395 or Japanese Patent Laid-Open No. 2016-44240, however, the moist heat resistance and the perspiration resistance are insufficient in some cases, due to having a polyester structure in a polycarbonate diol molecule.

Also, in the art described in International Publication No. WO 2010/041408, the abrasion resistance is insufficient in some cases, due to adhesion between the ester film and the coating layer.

As described above, in the conventional art, surface treatment agents for synthetic leather or artificial leather and film coating agents having moist heat resistance and perspiration resistance, with excellent abrasion resistance as well, have not been developed.

Accordingly, an object of the present invention is to provide a polycarbonate diol suitable for use, for example, as a constituent material of surface treatment agents for synthetic leather or artificial leather and film coating agents, and further, as a starting material of polyurethane, thermoplastic elastomers, etc. More specifically, an object of the present invention is to provide a polycarbonate diol exhibiting moist heat resistance and perspiration resistance in addition to excellent abrasion resistance, when used as a constituent material of surface treatment agents for synthetic leather or artificial leather and film coating agents.

SUMMARY OF THE INVENTION

The present inventor has conducted diligent studies to attain the object and consequently completed the present invention by gaining the findings that a polycarbonate diol having a repeating unit represented by the following formula (A) and a terminal hydroxyl group can achieve the object due to having a specific structure.

Specifically, the present invention is configured as follows.

[1] A polycarbonate diol comprising a repeating unit represented by the following formula (A) and a terminal hydroxyl group, the polycarbonate diol, wherein the polycarbonate diol has an integrated value of signals at 2.43 to 2.50 ppm of 0.01 to 1.0 relative to an integrated value of signals at 3.90 to 4.45 ppm taken as 1000 in $^{1}$H-NMR spectrum measured using deuterated chloroform as a solvent and tetramethylsilane as a reference material:

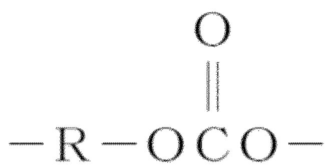

(A)

wherein R represents a divalent aliphatic or alicyclic hydrocarbon having 3 to 15 carbon atoms, and a plurality of R may be the same or different in all the repeating units.

[2] The polycarbonate diol according to the above [1], wherein 10 to 100 mol% of the repeating unit represented by

formula (A) is a repeating unit represented by the following formula (B):

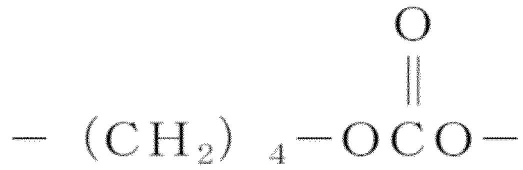

(B)

[3] The polycarbonate diol according to the above [1] or [2], having a hydroxy value of 32 to 280 mg-KOH/g measured by the neutralization titration method specified in JIS K0070 (1992).

[4] The polycarbonate diol according to any of the above [1] to [3], wherein the repeating unit represented by formula (A) comprises a repeating unit represented by the following formula (B) and a repeating unit represented by the following formula (C):

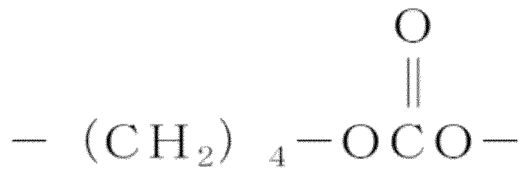

(B)

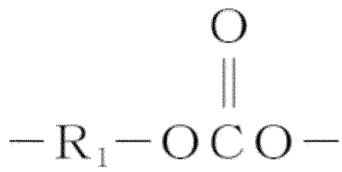

(C)

wherein $R_1$ represents a divalent unbranched aliphatic hydrocarbon having 3 to 6 carbon atoms other than $(CH_2)_4$ derived from 1,4-butane diol, and a plurality of $R_1$ may be the same or different.

[5] A coating composition comprising the polycarbonate diol according to any of the above [1] to [4] and an organic polyisocyanate.

[6] A coating composition comprising a urethane prepolymer as a reaction product of the polycarbonate diol according to any of the above [1] to [4] and an organic polyisocyanate, the urethane prepolymer having a terminal isocyanate group.

[7] A coating composition comprising a polyurethane resin as a reaction product of the polycarbonate diol according to any of the above [1] to [4], an organic polyisocyanate, and a chain extender.

[8] An aqueous coating composition comprising a polyurethane resin as a reaction product of the polycarbonate diol according to any of the above [1] to [4], an organic polyisocyanate, and a chain extender.

[9] A surface treatment agent comprising the polycarbonate diol according to any of the above [1] to [4] and an organic polyisocyanate.

[10] A surface treatment agent comprising a urethane prepolymer as a reaction product of the polycarbonate diol according to any of the above [1] to [4] and an organic polyisocyanate, the urethane prepolymer having a terminal isocyanate group.

[11] A surface treatment agent comprising a polyurethane resin as a reaction product of the polycarbonate diol according to any of the above [1] to [4], an organic polyisocyanate, and a chain extender.

[12] An aqueous surface treatment agent comprising a polyurethane resin as a reaction product of the polycarbonate diol according to any of the above [1] to [4], an organic polyisocyanate, and a chain extender.

[13] A thermoplastic polyurethane as a reaction product of the polycarbonate diol according to any of the above [1] to [4] and an organic polyisocyanate.

Advantageous Effect of the Invention

A polycarbonate diol of the present invention can exhibit moist heat resistance and perspiration resistance in addition to excellent abrasion resistance, when used as a constituent material of surface treatment agents for synthetic leather or artificial leather and film coating agents. Having these properties, the polycarbonate diol of the present invention can be suitably used as a constituent material of surface treatment agents for synthetic leather or artificial leather and

film coating agents.

BRIEF DESCRIPTION OF THE DRAWING

Figure 1 shows a $^{1}H$-NMR chart of a polycarbonate diol obtained in Example 8.

DETAILED DESCRIPTION OF THE PREFERRED EMBODIMENT

Hereinafter, the mode for carrying out the present invention (hereinafter, referred to as the "present embodiment") will be described in detail. The present invention is not limited by the description below and can be carried out with various modification or changes made therein.

<Polycarbonate diol>

A polycarbonate diol of the present embodiment comprises a repeating unit represented by the following formula (A) and a terminal hydroxyl group.

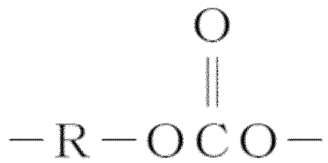

(A)

In formula (A), R represents a divalent aliphatic or alicyclic hydrocarbon having 3 to 15 carbon atoms, and a plurality of R may be the same or different in all the repeating units.

In the polycarbonate diol of the present embodiment, 10 to 100 mol% of the repeating unit represented by formula (A) are preferably a repeating unit represented by the following formula (B).

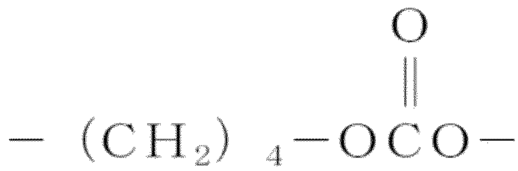

(B)

The polycarbonate diol of the present embodiment tends to have higher perspiration resistance, in the case of having a ratio of the repeating unit represented by formula (B) to the repeating unit represented by formula (A) of 10 mol% or more. Further, the polycarbonate diol of the present embodiment has a ratio of the repeating unit represented by formula (B) to the repeating unit represented by formula (A) of preferably 20 mol% or more, more preferably 30 mol% or more, so that the perspiration resistance and the abrasion resistance are more improved.

It is preferred that in the polycarbonate diol of the present embodiment, the repeating unit represented by formula (A) comprises the repeating unit represented by formula (B) and a repeating unit represented by the following formula (C):

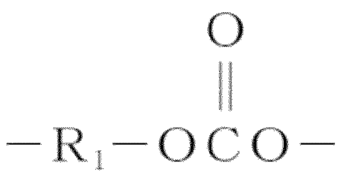

(C)

In formula (C), $R_1$ represents a divalent aliphatic hydrocarbon having 3 to 6 carbon atoms other than $(CH_2)_4$ derived from 1,4-butane diol, and the aliphatic hydrocarbon may have a branched structure. The aliphatic hydrocarbon having an unbranched structure is more preferred because higher heat resistance of the polycarbonate diol tends to be achieved. In all the repeating units, a plurality of $R_1$ may be the same or different.

In the polycarbonate diol of the present embodiment, the repeating units represented by formula (A) comprising the repeating units (B) and (C) are preferred, because the perspiration resistance and the abrasion resistance are

increased. In the polycarbonate diol of the present embodiment, a ratio of the repeating unit represented by formula (B) of 1 to 99 mol% relative to both of the repeating unit represented by formula (B) and the repeating unit represented by formula (C) is preferred; a ratio of 25 to 99 mol% is more preferred because the perspiration resistance and the abrasion resistance are enhanced; a ratio of 30 to 75 mol% is more preferred because the polycarbonate diol becomes liquid at room temperature (20°C), allowing easy handling; and a ratio of 40 to 60 mol% is particularly preferred, because the polycarbonate diol has reduced crystallinity with a tendency to produce a flexible polyurethane.

In a $^1$H-NMR spectrum measured using deuterated chloroform as a solvent and tetramethylsilane (TMS) as a reference material, the polycarbonate diol of the present embodiment has an integrated value of signals at 2.43 to 2.50 ppm (hereinafter also referred to as a "integrated value ratio") of 0.01 to 1.0 relative to the integrated value of signals at 3.90 to 4.45 ppm taken as 1000. In the $^1$H-NMR spectrum, the signals at 3.90 to 4.45 ppm are presumed to be signals of methylene bonded to carbonate and the signals at 2.43 to 2.50 ppm are presumed to be signals of methylene bonded to carbonyl in an ester. In the polycarbonate diol of the present embodiment, the integrated value ratio can be an index expressing the abundance of a presumed specific ester structure contained in a certain repeating unit. With an integrated value ratio of 0.01 or more, the polycarbonate diol of the present embodiment has enhanced adhesion to a substrate. Regarding the abrasion resistance, the coating layer is naturally required not to easily abrade, and adhesion between the coating layer and the substrate is influential; for example, lower adhesion causes reduction in the abrasion resistance or peeling of the coating layer due to friction. In order to obtain high abrasion resistance, higher adhesion is therefore preferred. The integrated value ratio is preferably 0.02 or more, more preferably 0.05 or more. For example, as shown in "Collection of material selection, structure control and modification of polyurethane," pp. 58 to 59, Technical Information Institute Co., Ltd., (2014), it is known that a polyurethane made from a polyester polyol has poor hot water resistance and perspiration resistance in comparison with a polyurethane made from a polycarbonate diol. The polycarbonate diol of the present embodiment causes no reduction in the hot water resistance and the perspiration resistance in the case of having an integrated value ratio of 1.0 or less, more preferably 0.8 or less.

The polycarbonate diol of the present embodiment has a ratio of the terminal OH group of preferably 95.0 to 99.9%. With a ratio of the terminal OH group of 99.9% or less, reduction in the smoothness of the coating layer surface due to formation of fine high-molecular weight gel is prevented, and with a ratio of the terminal OH group of 95.0% or more, a high-molecular weight polyurethane can be obtained, which are preferable. The ratio of the terminal OH group is more preferably 97.0 to 99.9%, still more preferably 98.0 to 99.9%.

In the present embodiment, the ratio of the terminal OH group is defined as follows. A polycarbonate diol in an amount of 70 g to 100 g is heated to a temperature of 160°C to 200°C under a pressure of 0.4 kPa or less and stirred, so that a fraction corresponding to about 1 to 2 wt% of the polycarbonate diol, i.e., about 1 g (0.7 to 2 g) of initial fraction, is obtained. The fraction obtained is dissolved in about 100 g (95 to 105 g) of acetone, and the resulting solution is collected. The solution collected is subjected to gas chromatography analysis (hereinafter referred to also as "GC analysis"), and the ratio of the terminal OH group is calculated from the peak area value in the chromatograph obtained, by using the following equation (1). The GC analysis was performed using a Gas Chromatography 6890 (manufactured by Hewlett Packard in US) having a column DB-WAX (manufactured by J&W in US) with a length of 30 m and a film thickness of 0.25 μm, with use of a hydrogen flame ionization detector (FID) as a detector. In the temperature rising profile of the column, the temperature is raised from 60°C to 250°C at a rate of 10°C/min and then maintained at the temperature for 15 minutes. The identification of each peak in the GC analysis was performed by the following GC-MS apparatus. A GC apparatus 6890 (manufactured by Hewlett Packard in US) having a column DB-WAX (manufactured by J&W in US) was used. In the GC apparatus, the temperature was raised from an initial temperature of 40°C to 220°C at a temperature rising rate of 10°C/min. As the MS apparatus, an Auto-mass SUN (manufactured by JEOL Ltd. in Japan) was used. In the MS apparatus, the measurement is performed at an ionization voltage of 70 eV, in a scanning range m/z of 10 to 500, with a photomultiplier gain of 450 V.

$$\text{Ratio (\%) of terminal OH group} = B/A \times 100 \quad \ldots \quad (1)$$

A: sum of peak areas of alcohols including diols
B: sum of peak areas of diols

The ratio of the terminal OH group corresponds to the ratio of the OH group to all the terminal groups of polycarbonate diol. In other words, as shown in the above, when a polycarbonate diol is heated to a temperature of 160°C to 200°C under a pressure of 0.4 kPa or less, the terminal portion of the polycarbonate diol is distilled as alcohols (refer to the following formula (a)). The distilled alcohols are not particularly limited, and examples thereof include a diol used as a starting material, impurities contained in the starting material such as cyclohexane diol and 1,5-hexane diol, a monoalcohol such as methanol derived from starting material carbonate compounds, and a monoalcohol having an

unsaturated hydrocarbon produced by a side reaction during polymerization.

$$\sim O\overset{O}{\overset{\|}{C}}OX + HOR_1O\overset{O}{\overset{\|}{C}}O\sim \rightarrow \sim O\overset{O}{\overset{\|}{C}}OR_1O\overset{O}{\overset{\|}{C}}O\sim + HOX \quad (a)$$

wherein X is -$R^2$-OH or $R^2$, and $R^1$ and $R^2$ each represent a hydrocarbon.

The ratio of diols to all the alcohols in the fraction is the ratio of the terminal OH group.

A method for manufacturing the polycarbonate diol of the present embodiment is not particularly limited, except for the method for controlling the integrated value ratio within a specific range. Examples of the method include various methods described in Polymer Reviews, vol. 9, pp. 9 to 20 (1994) by Schnell. The method for controlling the integrated value ratio within a specific range will be described later.

The hydroxy value of the polycarbonate diol of the present embodiment is preferably 32 to 280 mg-KOH/g. Having a hydroxy value of 280 mg-KOH/g or less, the polycarbonate diol of the present embodiment produces a polyurethane having excellent flexibility. Having a hydroxy value of 32 mg-KOH/g or more, the polycarbonate diol of the present embodiment allows a coating agent to have any solid content concentration without limitation, which is preferable. The hydroxy value of the polycarbonate diol of the present embodiment is more preferably 35 to 140 mg-KOH/g.

In the present embodiment, the hydroxy value of the polycarbonate diol may be measured by the method described in Examples described below.

When the polycarbonate diol of the present embodiment is manufactured from a diol and a carbonate compound as starting materials, various methods described in, for example, Polymer Reviews, vol. 9, pp. 9 to 20 (1994) by Schnell, may be employed as described above.

The diol for use as a starting material include, but not particularly limited to, a diol having no side chain such as 1,3-propane diol, 1,4-butane diol, 1,5-pentane diol, 1,6-hexane diol, 1,7-heptane diol, 1,8-octane diol, 1,9-nonane diol, 1,10-dodecane diol, 1,11-undecane diol, 1,12-dodecane diol, 1,13-tridecane diol, 1,14-tetradecane diol, and 1,15-pentadecane diol; a diol having a side chain such as 2-methyl-1,8-octane diol, 2-ethyl-1,6-hexane diol, 2-methyl-1,3-propane diol, 3-methyl-1,5-pentane diol, 2,4-dimethyl-1,5-pentane diol, 2,4-diethyl-1,5-pentane diol, 2-butyl-2-ethyl-1,3-propane diol, and 2,2-dimethyl-1,3-propane diol; and a cyclic diol such as 1,4-cyclohexane dimethanol, 2-bis(4-hydroxycyclohexyl)-propane, and 1,4-cyclohexane diol. One or two or more of the diols may be used as a starting material of the polycarbonate diol. In the case of using 1,4-butane diol, the abrasion resistance and the perspiration resistance are enhanced, which is preferable. Using 1,4-butane diol and one or two or more of 1,3-propane diol, 1,5-pentane diol, 1,6-hexane diol, 2-methyl-1,3-propane diol, and 3-methyl-1,5-pentane diol as starting materials of the polycarbonate diol is preferred, and using 1,4-butane diol and one or two or more of 1,3-propane diol, 1,5-pentane diol, and 1,6-hexane diol as starting materials of the polycarbonate diol is more preferred.

Further, a compound having three or more hydroxyl groups in a molecule such as trimethylol ethane, trimethylol propane, hexane triol, and pentaerythritol also may be used as a starting material of a polycarbonate diol, within a range without impairing the performance of the polycarbonate diol of the present embodiment. Using a compound having three or more hydroxyl groups in a molecule too much as a starting material of the polycarbonate diol causes gelation due to cross-linking during polymerization reaction of polycarbonate. In the case of using a compound having three or more hydroxyl groups in a molecule as a starting material of the polycarbonate diol, the ratio of the compound is therefore controlled to preferably 0.1 to 5 mol% relative to the number of moles of the diols for use as a starting material of the polycarbonate diol. The ratio is more preferably 0.1 to 1 mol%.

Examples of the carbonate as a starting material of the polycarbonate diol of the present embodiment include, but not particularly limited to, a dialkyl carbonate such as dimethyl carbonate, diethyl carbonate, dipropyl carbonate, and dibutyl carbonate; a diaryl carbonate such as diphenyl carbonate; and an alkylene carbonate such as ethylene carbonate, trimethylene carbonate, 1,2-propylene carbonate, 1,2-butylene carbonate, 1,3-butylene carbonate, and 1,2-pentylene carbonate. One or two or more carbonates thereof may be used as a starting material of the polycarbonate diol. Use of dimethyl carbonate, diethyl carbonate, diphenyl carbonate, dibutyl carbonate, or ethylene carbonate is preferred from the perspective of easy availability and easy condition setting for polymerization reaction.

In manufacturing of the polycarbonate diol of the present embodiment, addition of a catalyst is preferred. Examples of the catalyst include, but not particularly limited to, an alcoholate, a hydride, an oxide, an amide, a carbonate, a hydroxide, and a nitrogen-containing borate of an alkaline metal such as lithium, sodium, and potassium, and an alkaline earth metal such as magnesium, calcium, strontium, and barium, and further, a basic alkaline metal salt and alkaline earth metal salt of an organic acid. Also, examples of the catalyst include, but not particularly limited to, a metal, a salt, an alkoxide, and an organic compound of aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium. One or a plurality

of the catalysts may be selected therefrom for use. Use of one or a plurality of the catalysts of the metal, salt, alkoxide, and organic compound of sodium, potassium, magnesium, calcium, titanium, zirconium, tin, lead, or ytterbium is preferred, enabling the polymerization of polycarbonate diol to be favorably performed with little effect on the urethane reaction using the polycarbonate diol thus produced. Use of titanium, ytterbium, tin, or zirconium as the catalyst is more preferred.

The polycarbonate diol of the present embodiment may include the catalyst described above. In the polycarbonate diol of the present embodiment, the content of the catalyst as the amount of metal elements measured by using inductively coupled plasma (hereinafter also referred to as "ICP") is preferably 0.0001 to 0.05 wt%. With a content of the catalyst in the range, the polymerization of polycarbonate diol is favorably performed with little effect on the urethane reaction using the polycarbonate diol thus produced. The content of the catalyst as the amount of metal elements measured by using ICP is more preferably 0.0005 to 0.02 wt%.

In the polycarbonate diol of the present embodiment, the content of at least one metal element selected from the group consisting of titanium, ytterbium, tin, and zirconium measured by using ICP is preferably 0.0001 to 0.05 wt%, more preferably 0.0005 to 0.02 wt%. Also, in the polycarbonate diol of the present embodiment, the total content of titanium, ytterbium, tin, and zirconium measured by using ICP is preferably 0.0001 to 0.05 wt%, more preferably 0.0005 to 0.02 wt%.

In the present embodiment, the content of metal elements in the polycarbonate diol can be measured by a method described in the Examples described below.

When the polycarbonate diol of the present embodiment is used, for example, as a starting material of polyurethane, it is preferable that the catalyst used in manufacturing of the polycarbonate diol be treated with a phosphorus compound. Examples of the phosphorus compound include, but not particularly limited to, a phosphate triester such as trimethyl phosphate, triethyl phosphate, tributyl phosphate, di-2-ethylhexyl phosphate, triphenyl phosphate, tricresyl phosphate, and cresyl-diphenyl phosphate; an acidic phosphate such as methyl acid phosphate, ethyl acid phosphate, propyl acid phosphate, isopropyl acid phosphate, butyl acid phosphate, lauryl acid phosphate, stearyl acid phosphate, 2-ethylhexyl acid phosphate, isodecyl acid phosphate, butoxyethyl acid phosphate, oleyl acid phosphate, tetracosyl acid phosphate, ethylene glycol acid phosphate, 2-hydroxyethylmethacrylate acid phosphate, dibutyl phosphate, monobutyl phosphate, monoisodecyl phosphate, and bis(2-ethylhexyl)phosphate; a phosphite ester such as triphenyl phosphite, tris nonylphenyl phosphite, tricresyl phosphite, triethyl phosphite, tris(2-ethylhexyl)phosphite, tridecyl phosphite, trilauryl phosphite, tris(tridecyl)phosphite, trioleyl phosphite, diphenyl mono(2-ethylhexyl)phosphite, diphenyl monodecyl phosphite, diphenyl(monodecyl)phosphite, trilauryl phosphite, diethyl hydrogen phosphite, bis(2-ethylhexyl)hydrogen phosphite, dilauryl hydrogen phosphite, dioleyl hydrogen phosphite, diphenyl hydrogen phosphite, tetraphenyl dipropylene glycol diphosphite, bis(decyl)pentaerythritol diphosphite, tristearyl phosphite, distearyl pentaerythritol diphosphite, and tris(2,4-di-tert-butylphenyl)phosphite; and further, phosphoric acid, phosphorous acid, and hypophosphorous acid.

The polycarbonate diol of the present embodiment may contain phosphorus compounds. In the polycarbonate diol of the present embodiment, the content of phosphorus compounds in terms of phosphorus element (P) content measured by using ICP is preferably 0.0001 to 0.05 wt%. With a phosphorus compound content in the range, for example, when the polycarbonate diol of the present embodiment is used as a starting material of polyurethane, the effect of the catalyst used in manufacturing of the polycarbonate diol can be almost eliminated, and further, the phosphorus compounds have little effect on the reaction for manufacture of polyurethane and physical properties of reaction products. In the polycarbonate diol of the present embodiment, the phosphorus element (P) content measured by using ICP is more preferably 0.0005 to 0.02 wt%.

The water content in the polycarbonate diol of the present embodiment is preferably 10 to 500 ppm.

A specific example of a method for manufacturing the polycarbonate diol of the present embodiment is shown as follows. Manufacturing of the polycarbonate diol of the present embodiment may be performed, for example, in two steps, though not particularly limited thereto. A diol and a carbonate are mixed at a molar ratio (diol:carbonate) of, for example, 20:1 to 1:10, and the mixture is subjected to a first step reaction under normal pressure or reduced pressure, at 100 to 250°C. In the case of using dimethyl carbonate as the carbonate, the methanol produced is removed as a mixture with dimethyl carbonate, so that a low-molecular weight polycarbonate diol can be obtained. In the case of using diethyl carbonate as the carbonate, the ethanol produced is removed as a mixture with diethyl carbonate, so that a low-molecular weight polycarbonate diol can be obtained. Further, in the case of using ethylene carbonate as the carbonate, the ethylene glycol produced is removed as a mixture with ethylene carbonate, so that a low-molecular weight polycarbonate diol can be obtained. Subsequently, in a second-step reaction, the reaction product in the first step is heated under reduced pressure at 160 to 250°C to remove the unreacted diol and carbonate and condense the low-molecular weight polycarbonate diol, so that a polycarbonate diol having a specific molecular weight can be obtained.

Examples of the method for producing a polycarbonate diol having an integrated value ratio in the present embodiment include a method of using a dibasic acid or a dibasic acid ester, lactone, and polyester polyol. Examples of the dibasic acid include, but not particularly limited to, oxalic acid, malonic acid, succinic acid, glutaric acid, adipic acid, tartaric acid, glutamic acid, sebacic acid, and brassylic acid. Examples of the dibasic ester include, but not particularly limited to, methyl, ethyl, butyl, isobutyl, 2-ethylhexyl, isodecyl, and isononyl esters of the dibasic acids. Examples of the

lactone include, but not particularly limited to, α-acetolactone, β-propiolactone, γ-butyrolactone, δ-valerolactone, and ε-caprolactone. The polyester polyol can be obtained, for example, by a condensation reaction of one or a mixture of two or more of dibasic acids and one or a mixture of two or more of polyhydric alcohols, though not particularly limited thereto. Examples of the dibasic acid include, but not particularly limited to, a carboxylic acid such as succinic acid, adipic acid, dimer acid, maleic anhydride, phthalic anhydride, isophthalic acid, terephthalic acid, and 1,4-cyclohexane dicarboxylic acid. Examples of the polyhydric alcohol include, but not particularly limited to, ethylene glycol, propylene glycol, diethylene glycol, 1,4-butane diol, neopentyl glycol, 1,6-hexane diol, trimethylpentane diol, cyclohexane diol, trimethylol propane, glycerol, pentaerythritol, 2-methylol propane diol, and ethoxylated trimethylol propane.
Alternatively, for example, polycaprolactones obtained by ring-opening polymerization of lactones such as ε-caprolactone with use of a polyhydric alcohol can be used as polyester polyols, though not particularly limited thereto. In the case of using a lactone, the hot water resistance of the resulting polycarbonate diol can be maintained, which is preferable. Use of one or two or more lactones selected from γ-butyrolactone, δ-valerolactone, and ε-caprolactone is more preferable. Specific examples of the method include a method of mixing a dibasic acid or a dibasic acid ester, a lactone, and a polyester polyol with a diol and a carbonate as starting materials for polymerization to produce the polycarbonate diol, and a method of adding a dibasic acid or a dibasic acid ester, a lactone, and a polyester polyol to a general polycarbonate diol and heating the obtained mixture at a temperature of 100 to 200°C for 30 minutes to 5 hours.

Also, the ratio of the terminal OH group in the polycarbonate diol for use in the present embodiment can be adjusted by selecting one method or appropriately combining methods depending on the manufacturing conditions such as impurities in the starting material, temperature, and time, and further, in the case of using dialkyl carbonate and/or diaryl carbonate as the starting material carbonate, conditions such as a charging ratio between diol and carbonate in the starting material. In the case of using dialkyl carbonate and/or diaryl carbonate as the starting material carbonate, when the starting material diol and carbonate are charged for the reaction at a stoichiometric ratio or a ratio close thereto corresponding to the molecular weight of the target polycarbonate diol, an alkyl group and an aryl group derived from the carbonate tend to remain at the terminal of the polycarbonate diol. The amount of the diol relative to the carbonate in the starting material is therefore adjusted to, for example, 1.01 to 10 times the stoichiometric amount, so that the polycarbonate diol can have an increased amount of the terminal hydroxyl group with reduced amounts of the terminal alkyl group and the terminal aryl group. Furthermore, through side reactions, a vinyl group is present at the terminal of the polycarbonate diol, and in the case of using dimethyl carbonate as the carbonate, a methyl ester or a methyl ether is present at the terminal. In general, the side reactions tend to occur with increase in the reaction temperature and increase in the reaction time.

<Use>

The polycarbonate diol of the present embodiment can be used as a constituent material of surface treatment agents for synthetic leather or artificial leather and film coating agents, as a starting material of polyurethanes and thermoplastic elastomers, and further, as a modifier of polyesters. In particular, when used as a constituent material of surface treatment agents for synthetic leather or artificial leather and film coating agents, the polycarbonate diol of the present embodiment can exhibit moist heat resistance and perspiration resistance in addition to excellent abrasion resistance.

The thermoplastic polyurethane of the present embodiment can be obtained by using the polycarbonate diol described above and a polyisocyanate.

The coating composition of the present embodiment comprises the polycarbonate diol described above and an organic polyisocyanate.

Also, the coating composition of the present embodiment preferably comprises a urethane prepolymer obtained by reacting the polycarbonate diol described above with an organic polyisocyanate, the urethane prepolymer having a terminal isocyanate group.

Further, more preferably, the coating composition of the present embodiment comprises a polyurethane resin obtained by a reaction of the polycarbonate diol described above, an organic polyisocyanate, and a chain extender, and still more preferably, is an aqueous coating composition which comprises a polyurethane resin obtained by a reaction of the polycarbonate diol described above, an organic polyisocyanate, and a chain extender.

Also, the surface treatment agent of the present embodiment comprises the polycarbonate diol described above and an organic polyisocyanate.

Further, the surface treatment agent of the present embodiment preferably comprises a urethane prepolymer as a reaction product of the polycarbonate diol described above and an organic polyisocyanate, the urethane prepolymer having a terminal isocyanate group.

Furthermore, more preferably, the surface treatment agent of the present embodiment comprises a polyurethane resin as a reaction product of the polycarbonate diol described above, an organic polyisocyanate, and a chain extender, and still more preferably, is an aqueous surface treatment agent that comprises a polyurethane resin as a reaction

product of the polycarbonate diol described above, an organic polyisocyanate, and a chain extender.

Examples of the organic polyisocyanate for use include, but not particularly limited to, a publicly known aromatic diisocyanate such as 2,4-tolylene diisocyanate, 2,6-tolylene diisocyanate, a mixture of the tolylene diisocyanates (TDI), crude TDI, diphenylmethane-4,4'-diisocyanate (MDI), crude MDI, naphthalene-1,5-diisocyanate (NDI), 3,3'-dimethyl-4,4'-biphenylene diisocyanate, polymethylene polyphenyl isocyanate, xylylene diisocyanate (XDI), and phenylene diisocyanate; a publicly known aliphatic diisocyanate such as 4,4'-methylene biscyclohexyl diisocyanate (hydrogenated MDI), hexamethylene diisocyanate (HMDI), isophorone diisocyanate (IPDI), and cyclohexane diisocyanate (hydrogenated XDI); and an isocyanurate modified product, a carbodiimide modified product, and a biuret modified product of the isocyanates. These organic polyisocyanates may be used singly or in combinations of two or more. Also, the isocyanate group of these organic polyisocyanates may be masked with a blocking agent.

Also, in the reaction between the polycarbonate diol and the organic polyisocyanate, a chain extender may be used as a copolymerizable component when desired. As the chain extender, for example, a chain extender commonly used in the polyurethane industry such as water, a low-molecular weight polyol, and a polyamine may be used, though not particularly limited thereto. Examples of the chain extender include, but not particularly limited to, a low-molecular weight polyol such as ethylene glycol, 1,3-propane diol, 1,4-butane diol, 1,5-pentane diol, 1,6-hexane diol, neopentyl glycol, 1,10-decane diol, 1,1-cyclohexane dimethanol, 1,4-cyclohexane dimethanol, xylylene glycol, and bis(p-hydroxy)diphenyl, bis(p-hydroxyphenyl)propane; and a polyamine such as ethylene diamine, hexamethylene diamine, isophorone diamine, xylylene diamine, diphenyl diamine, and diamino diphenylmethane. These chain extenders may be used singly or in combinations of two or more.

As the method for manufacturing the coating composition of the present embodiment, a manufacturing method publicly known in the industry is used. For example, a two-component solvent-based coating composition produced by mixing a coating main agent obtained from the polycarbonate diol described above and a curing agent made of an organic polyisocyanate just before coating; a one-component solvent-based coating composition made of a urethane prepolymer having a terminal isocyanate group obtained by a reaction between the polycarbonate diol described above and an organic polyisocyanate; a one-component solvent-based coating composition made of a urethane prepolymer having a terminal isocyanate group obtained by a reaction between the polycarbonate diol and an organic polyisocyanate; a one-component solvent-based coating composition made of a polyurethane resin obtained by a reaction of the polycarbonate diol described above, an organic polyisocyanate, and a chain extender; or a one-component aqueous coating composition can be manufactured.

To the coating composition of the present embodiment, for example, a curing accelerator (catalyst), a filler, a dispersant, a flame retardant, a dye, an organic or inorganic pigment, a mold releasing agent, a flowability adjustor, a plasticizer, an antioxidant, a UV absorber, a photo stabilizer, a defoamer, a leveling agent, a colorant, a solvent, etc., may be added corresponding to various uses.

Examples of the pigment include, but not particularly limited to, an inorganic pigment such as titanium dioxide, zinc oxide, iron oxide, calcium carbonate, barium sulfate, chrome yellow, clay, talc, and carbon block, and an organic pigment such as an azo-based pigment, a diazo-based pigment, a condensed azo-based pigment, a thioindigo-based pigment, an indanthrone-based pigment, an anthraquinone-based pigment, a benzimidazole-based pigment, a phthalocyanine-based pigment, an isoindolinone-based pigment, a perylene-based pigment, a quinacridone-based pigment, a dioxane-based pigment, and a diketopyrrolopyrrole-based pigment.

Examples of the curing accelerator include, but not particularly limited to, dibutyltin diacetate, dibutyltin dioctylate, dibutyltin dilaurate, triethylamine, diethanol amine, p-toluene sulfonic acid, dodecylbenzene sulfonic acid, and dinonylnaphthalene sulfonic acid.

Examples of the UV absorber include, but not particularly limited to, a benzophenone-based absorber, a benzotriazole-based absorber, a cyanoacrylate-based absorber, a salicylate-based absorber, and an oxanilide-based absorber. Examples of the UV stabilizer include a hindered amine-based compound.

Examples of the solvent for coating material include, but not particularly limited to, dimethylformamide, diethylformamide, dimethylacetamide, dimethyl sulfoxide, tetrahydrofuran, acetone, methyl ethyl ketone, methyl isobutyl ketone, dioxane, cyclohexanone, benzene, toluene, xylene, ethyl cellosolve, ethyl acetate, butyl acetate, ethanol, isopropanol, n-butanol, and water. These solvents may be used singly or a plurality thereof may be mixed for use.

The method for manufacturing the thermoplastic polyurethane of the present embodiment is not particularly limited and a polyurethane formation reaction publicly known in the polyurethane industry is used. For example, through a reaction between the polycarbonate diol described above and an organic polyisocyanate under an atmospheric pressure at a temperature in the range from normal temperature to 200°C, a thermoplastic polyurethane can be manufactured. In the case of using a chain extender, the addition may be performed at the start of the reaction, or in the middle of the reaction. Regarding the method for manufacturing the thermoplastic polyurethane of the present embodiment, for example, US Patent No. 5,070,173 serves as a reference.

In the polyurethane formation reaction, a publicly known polymerization catalyst and solvent may be used. Examples of the polymerization catalyst for use include, but not particularly limited to, dibutyltin dilaurate.

To the thermoplastic polyurethane of the present embodiment, a stabilizer such as a heat stabilizer (for example, an antioxidant) and a photo stabilizer is preferably added. Also, a plasticizer, an inorganic filler, a lubricant, a colorant, a silicone oil, a foaming agent, a flame retardant, etc., may be added thereto.

## Examples

The present invention will now be described with reference to Examples and Comparative Examples.
The following Examples are provided to illustrate the present invention, and the present invention is not limited thereto.
The values of physical properties shown in the following Examples and Comparative Examples were measured by the following methods.

### 1. Determination of integrated value ratio of polycarbonate diol ($^1$H-NMR)

The integrated value ratio of the polycarbonate diol was determined as described below.
First, 10 mg of a sample was dissolved in 0.75 mL of deuterated chloroform (manufactured by Aldrich). To the solution, tetramethylsilane (TMS) was added as chemical shift reference, and the $^1$H-NMR of the resulting solution was measured by using ECZ500 (SC) manufactured by JEOL Ltd. In the measurement at a resonance frequency of 500 MHz, a pulse width of 45°, a waiting time of 5 seconds, a cumulative number of 5000, and a TMS signal of 0 ppm, a $^1$H-NMR spectrum was obtained. The integrated value ratio of the polycarbonate diol was obtained from the following equation (2) using an integrated value of signals at 3.90 to 4.45 ppm and an integrated value of signals at 2.43 to 2.50 ppm obtained in the $^1$H-NMR measurement.

$$\text{Integrated value ratio} = D/C \times 1000 \quad \ldots (2)$$

C: integrated value of signals at 3.90 to 4.45 ppm
D: integrated value of signals at 2.43 to 2.50 ppm

### 2. Analysis (ICP) of components contained in polycarbonate diol

Each of the components contained in the polycarbonate diol was analyzed as follows. First, a sample was weighed and placed in a decomposition container made of Teflon (R), to which high-purity nitric acid (manufactured by Kanto Chemical Co., Inc.) was added to perform decomposition by using a microwave decomposition apparatus (ETHOS TC, manufactured by Milestone General K.K.). The sample was completely decomposed, and the resulting decomposition solution was colorless and transparent. Pure water was added to the decomposition solution to make a test solution. The resulting test solution was subjected to quantitative analysis based on reference solutions of respective elements by using an inductively coupled plasma analyzer (iCAP6300 Duo, manufactured by Thermo Fisher Scientific K.K.) .

### 3. Determination of ratio of terminal OH group in polycarbonate diol

The ratio of the terminal OH group in the polycarbonate diol was determined as follows. First, 70 g to 100 g of polycarbonate diol was weighed and placed in a 300-mL eggplant flask. Using a rotary evaporator connected to a trap sphere for fraction collection, the polycarbonate diol in the eggplant flask was heated and stirred in a heating bath at about 180°C under a pressure of 0.4 kPa or less, so that a fraction corresponding to about 1 to 2 wt% of the polycarbonate diol, i.e., about 1 g (0.7 to 2 g) of an initial fraction, was obtained in the trap sphere. The fraction obtained was dissolved in about 100 g (95 to 105 g) of acetone to be collected as the solution. The collected solution was subjected to gas chromatography analysis (hereinafter also referred to as "GC analysis"), and the ratio of the terminal OH group in the polycarbonate diol was calculated from the peak area value in the resulting chromatograph, by using the following equation (1). The GC analysis was performed using a Gas Chromatography 6890 (manufactured by Hewlett Packard in US) having a column DB-WAX (manufactured by J&W in US) with a length of 30 m and a film thickness of 0.25 μm, with use of a hydrogen flame ionization detector (FID) as a detector. In the temperature rising profile of the column, the temperature was raised from 60°C to 250°C at a rate of 10°C/min and then maintained at the temperature for 15 minutes. The identification of each peak in the GC analysis was performed by the following GC-MS apparatus. As the GC apparatus, an apparatus 6890 (manufactured by Hewlett Packard in US) having a column DB-WAX (manufactured by J&W in US) was used. In the GC apparatus, the temperature was raised from an initial temperature of 40°C to 220°C at a temperature rising rate of 10°C/min. As the MS apparatus, an Auto-mass SUN (manufactured by JEOL Ltd. in Japan) was used. In

the MS apparatus, the measurement was performed at an ionization voltage of 70 eV, in a scanning range m/z of 10 to 500, with a photomultiplier gain of 450 V.

$$\text{Ratio (\%) of terminal OH group} = B/A \times 100 \ldots (1)$$

A: sum of peak areas of alcohols including diols
B: sum of peak areas of diols

4. Determination of composition of polycarbonate diol

The composition of the polycarbonate diol was determined as described below. First, 1 g of a sample was weighed and placed in a 100-mL eggplant flask, in which 30 g of ethanol and 4 g of potassium hydroxide were placed to obtain a mixture. The resulting mixture was heated in an oil bath at 100°C for 1 hour. After the mixture was cooled to room temperature, one to two drops of phenolphthalein were added to the mixture as an indicator, and the mixture was neutralized with hydrochloric acid. The mixture was then cooled in a refrigerator for 3 hours, and after removal of precipitated salt by filtration, the filtrate was analyzed by gas chromatography (GC). The GC analysis was performed using a Gas Chromatography GC14B (manufactured by Shimadzu Corporation) having a column DB-WAX (manufactured by J&W in US) with a length of 30 m and a film thickness of 0.25 μm, with use of diethylene glycol diethyl ester as internal reference and a hydrogen flame ionization detector (FID) as a detector. In the temperature rising profile of the column, the temperature was maintained at 60°C for 5 minutes, and then raised to 250°C at a rate of 10°C/min. Based on the area value of the diol obtained by the GC analysis, the composition of the polycarbonate diol was determined.

5. Determination of hydroxy value of polycarbonate diol

The hydroxy value of the polycarbonate diol was determined according to "neutralization titration method (JIS K0070-1992)" with use of acetic anhydride and pyridine for titration of ethanol solution of potassium hydroxide.

6. Confirmation of characteristics of polycarbonate diol

A polycarbonate diol heated to 80°C was placed in a transparent sample bottle and cooled for visual observation at room temperature. The sample was determined to be in a liquid state in the case of being transparent and having flowability even just a bit when the sample bottle was tilted; and the sample was determined to be in a solid state in the case of being opaque and/or having no changes in the state when the sample bottle was tilted.

7. Abrasion resistance of surface-treated face

In accordance with JIS K5600-5-9-1990, a surface-treated face of synthetic leather was evaluated through visual observation of the appearance of the test piece. In accordance with JIS K5600-8-1-2014, the degree and quantity of defects were designated by grades 0 to 5, and regarded as the abrasion resistance. The wheel for use was H22, and a 500-g weight was used.

8. Change in abrasion resistance of surface-treated face

A synthetic leather was immersed in hot water at 80°C for 1 day. Water on the surface was wiped off, and the leather was then cured in a thermostatic chamber at 23°C and 50% RH for 7 days. The abrasion resistance was evaluated by the method described above, and the change in the grades from before testing was regarded as the change in the abrasion resistance.

9. Perspiration resistance of surface-treated face

To the surface-treated face of synthetic leather, 0.1 g of oleic acid was adhered and left standing at 20°C for 4 hours, and the appearance of the test piece was visually observed for evaluation. In accordance with JIS K5600-8-1-2014, the degree and quantity of defects were designated by grades 0 to 5 and regarded as the perspiration resistance.

10. Hot water resistance of polyurethane

A polyurethane film obtained from the polycarbonate diol was cut into a strip of 10 mm by 80 mm, which was cured in a thermostat chamber at 23°C and 50% RH for 3 days to make a test piece. The breaking strength (unit: MPa) of the test piece was measured by a tensile strength tester Tensilon (RTC-1250A, manufactured by ORIENTEC) with a distance between chucks of 50 mm and at a tensile rate of 100 mm/min, and regarded as the breaking strength before testing of hot water resistance. Further, the polyurethane film was immersed in hot water at 90°C for 3 days, and cured in a thermostat chamber at 23°C and 50% RH for 7 days to make a test piece, of which breaking strength (unit: MPa) was measured by the method described above, and regarded as the breaking strength after testing of hot water resistance. The strength retention ratio was determined by the following equation (3) and regarded as the indicator of the hot water resistance of polyurethane.

$$\text{Strength retention ratio (\%)} = F/E \times 100 \quad \ldots \quad (3)$$

E: breaking strength (MPa) before testing of hot water resistance
F: breaking strength (MPa) after testing of hot water resistance

11. Perspiration resistance of polyurethane

Using a polyurethane film, the perspiration resistance of the surface-treated face was evaluated by the method described above, and regarded as the perspiration resistance of polyurethane.

12. Heat stability (heat resistance) of polycarbonate diol

The heat stability (heat resistance) of the polycarbonate diol was determined as described below. Using a simultaneous thermogravimetric analyzer (STA7000RV, manufactured by Hitachi High-Tech Science Corporation), measurement was performed under nitrogen to determine the temperature at which the mass of the sample decreased by 5%, and the temperature was regarded as the heat resistance of the polycarbonate diol. The heat resistance of the polycarbonate diol was evaluated higher with increase in the temperature at which the mass of the sample decreased by 5%.

13. Flexibility of polyurethane

A polyurethane film obtained from the polycarbonate diol was cut into a strip of 10 mm by 80 mm, which was cured in a thermostat chamber at 23°C and 50% RH for 3 days to make a test piece. The stress (unit: MPa) of the test piece was measured by a tensile strength tester Tensilon (RTC-1250A, manufactured by ORIENTEC) with a distance between chucks of 50 mm and at a tensile rate of 100 mm/min, and the stress at 10% elongation was regarded as the flexibility of the polyurethane. The polyurethane was regarded to have high flexibility when the stress value was small.

[Comparative Example 1]

In a 2-L glass flask having a rectification tower filled with a regular filling material and a stirring device, 650 g (7.2 mol) of dimethyl carbonate, 380 g (4.2 mol) of 1,4-butane diol, and 500 g (4.2 mol) of 1,6-hexane diol were placed. To the flask, 0.2 g of titanium tetrabutoxide was added as a catalyst, and the mixture in the flask was stirred and heated under normal pressure. The reaction temperature was set at 150°C, and a reaction was performed for 25 hours while distilling off the mixture of methanol and dimethyl carbonate produced. The pressure in the flask was then reduced to 12 kPa, and the reaction was performed at 175°C for further 10 hours while distilling off the diol and dimethyl carbonate. To the flask, 0.22 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-21.

[Example 1]

In a 2-L glass flask having a rectification tower filled with a regular filling material and a stirring device, 650 g (7.2 mol) of dimethyl carbonate, 380 g (4.2 mol) of 1,4-butane diol, 500 g (4.2 mol) of 1,6-hexane diol, and 0.01 g of γ-butyrolactone were placed. To the flask, 0.2 g of titanium tetrabutoxide was added as a catalyst, and the mixture in the

flask was stirred and heated under normal pressure. The reaction temperature was set at 150°C, and a reaction was performed for 25 hours while distilling off the mixture of methanol and dimethyl carbonate produced. The pressure in the flask was then reduced to 12 kPa, and the reaction was performed at 175°C for further 10 hours while distilling off the diol and dimethyl carbonate. To the flask, 0.22 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-1.

[Example 2]

A reaction was performed in the same manner as in Example 1 except that the amount of γ-butyrolactone was changed to 0.03 g. The analysis results of the resulting polycarbonate diol are shown in Table 1. The polycarbonate diol is abbreviated to PC-2.

[Example 3]

A reaction was performed in the same manner as in Example 1 except that the amount of γ-butyrolactone was changed to 0.21 g. The analysis results of the resulting polycarbonate diol are shown in Table 1. The heat stability (heat resistance) of the polycarbonate diol was 298°C. The polycarbonate diol is abbreviated to PC-3.

[Example 4]

A reaction was performed in the same manner as in Example 1 except that the amount of γ-butyrolactone was changed to 0.64 g. The analysis results of the resulting polycarbonate diol are shown in Table 1. The polycarbonate diol is abbreviated to PC-4.

[Comparative Example 2]

A reaction was performed in the same manner as in Example 1 except that the amount of γ-butyrolactone was changed to 0.92 g. The analysis results of the resulting polycarbonate diol are shown in Table 1. The polycarbonate diol is abbreviated to PC-22.

[Example 5]

In a 2-L glass flask having a rectification tower filled with a regular filling material and a stirring device, 600 g (6.8 mol) of ethylene carbonate, 15 g (0.2 mol) of 1,4-butane diol, and 800 g (6.8 mol) of 1,6-hexane diol were placed. To the flask, 0.35 g of titanium tetrabutoxide was added as a catalyst, and the mixture in the flask was stirred and heated under normal pressure. The reaction temperature was then set at 150°C, and a reaction was performed for 25 hours while distilling off the mixture of ethylene glycol and ethylene carbonate produced. Further, the pressure in the flask was reduced to 12 kPa, and the reaction was performed at 175°C for further 10 hours while distilling off the diol and ethylene carbonate. Subsequently, 0.04 g of ε-caprolactone was added to perform a reaction at 150°C for 5 hours. To the flask, 0.39 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-5.

[Example 6]

A reaction was performed in the same manner as in Example 5 except that the amount of 1,4-butane diol was changed to 135 g (1.5 mol) and the amount of 1,6-hexane diol was changed to 650 g (5.5 mol). The analysis results of the resulting polycarbonate diol are shown in Table 1. The polycarbonate diol is abbreviated to PC-6.

[Example 7]

A reaction was performed in the same manner as in Example 5 except that the amount of 1,4-butane diol was changed to 215 g (3.4 mol) and the amount of 1,6-hexane diol was changed to 550 g (4.7 mol). The analysis results of the resulting polycarbonate diol are shown in Table 1. The polycarbonate diol is abbreviated to PC-7.

[Example 8]

A reaction was performed in the same manner as in Example 5 except that the amount of 1,4-butane diol was changed to 455 g (5.1 mol) and the amount of 1,6-hexane diol was changed to 230 g (2.0 mol). The analysis results of the resulting polycarbonate diol are shown in Table 1. Also, the heat stability (heat resistance) of the polycarbonate diol was 291°C. The polycarbonate diol is abbreviated to PC-8. The $^{1}$H-NMR analysis chart of polycarbonate diol PC-8 obtained in Example 8 is shown in Figure 1.

[Example 9]

A reaction was performed in the same manner as in Example 5 except that the amount of 1,4-butane diol was changed to 515 g (5.7 mol) and the amount of 1,6-hexane diol was changed to 140 g (1.2 mol). The analysis results of the resulting polycarbonate diol are shown in Table 1. The polycarbonate diol is abbreviated to PC-9.

[Example 10]

In a 2-L glass flask having a rectification tower filled with a regular filling material and a stirring device, 750 g (8.5 mol) of ethylene carbonate, 550 g (6.1 mol) of 1,4-butane diol, 230 g (2.6 mol) of 2-methyl-1,3-propane diol, and 0.06 g of γ-butyrolactone were placed. To the flask, 0.2 g of titanium tetrabutoxide was added as a catalyst, and the mixture in the flask was stirred and heated under normal pressure. The reaction temperature was then set at 140°C, and a reaction was performed for 20 hours while distilling off the mixture of ethylene glycol and ethylene carbonate produced. Further, the pressure in the flask was reduced to 12 kPa, and the reaction was performed at 170°C for further 3 hours while distilling off the diol and ethylene carbonate. To the flask, 0.22 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-10.

[Example 11]

A reaction was performed in the same manner as in Example 10 except that the pressure in the flask was changed to 12 kPa and the reaction time at a temperature of 170°C was changed to 8 hours. The analysis results of the resulting polycarbonate diol are shown in Table 1. The polycarbonate diol is abbreviated to PC-11.

[Example 12]

In a 2-L glass flask having a rectification tower filled with a regular filling material and a stirring device, 750 g (8.5 mol) of ethylene carbonate, 550 g (6.1 mol) of 1,4-butane diol, 230 g (2.6 mol) of 2-methyl-1,3-propane diol, and 0.06 g of γ-butyrolactone were placed. To the flask, 0.2 g of titanium tetrabutoxide was added as a catalyst, and the mixture in the flask was stirred and heated under normal pressure. The reaction temperature was then set at 150°C, and a reaction was performed for 25 hours while distilling off the mixture of ethylene glycol and ethylene carbonate produced. Further, the pressure in the flask was reduced to 12 kPa, and the reaction was performed at 175°C for further 15 hours while distilling off the diol and ethylene carbonate. To the flask, 0.22 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1.

The heat stability (heat resistance) of the polycarbonate diol was 258°C. The polycarbonate diol is abbreviated to PC-12.

[Example 13]

A reaction was performed in the same manner as in Example 12 except that the pressure in the flask was changed to 12 kPa and the reaction time at a temperature of 175°C was changed to 30 hours. The analysis results of the resulting polycarbonate diol are shown in Table 1. The polycarbonate diol is abbreviated to PC-13.

[Example 14]

In a 2-L glass flask having a rectification tower filled with a regular filling material and a stirring device, 670 g (7.6 mol) of ethylene carbonate, 350 g (3.9 mol) of 1,4-butane diol, 380 g (3.7 mol) of 1,5-pentane diol, and 0.35 g of γ-butyrolactone were placed. To the flask, 0.3 g of titanium tetrabutoxide was added as a catalyst, and the mixture in the

flask was stirred and heated under normal pressure. The reaction temperature was then set at 150°C, and a reaction was performed for 25 hours while distilling off the mixture of ethylene glycol and ethylene carbonate produced. Further, the pressure in the flask was reduced to 12 kPa, and the reaction was performed at 175°C for further 15 hours while distilling off the diol and ethylene carbonate. To the flask, 0.33 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-14.

[Example 15]

In a 2-L glass flask having a rectification tower filled with a regular filling material and a stirring device, 600 g (6.7 mol) of dimethyl carbonate, 480 g (5.3 mol) of 1,4-butane diol, 510 g (2.5 mol) of 1,12-dodecane diol, and 0.26 g of γ-butyrolactone were placed. To the flask, 0.3 g of titanium tetrabutoxide was added as a catalyst, and the mixture in the flask was stirred and heated under normal pressure. The reaction temperature was set at 150°C, and a reaction was performed for 25 hours while distilling off the mixture of methanol and dimethyl carbonate produced. The pressure in the flask was then reduced to 12 kPa, and the reaction was performed at 175°C for further 10 hours while distilling off the diol and dimethyl carbonate. To the flask, 0.33 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-15.

[Example 16]

In a 2-L glass flask having a rectification tower filled with a regular filling material and a stirring device, 670 g (7.6 mol) of ethylene carbonate, 400 g (3.9 mol) of 1,5-pentane diol, 450 g (3.8 mol) of 1,6-hexane diol, and 0.15 g of ε-caprolactone were placed. To the flask, 0.3 g of titanium tetrabutoxide was added as a catalyst, and the mixture in the flask was stirred and heated under normal pressure. The reaction temperature was then set at 150°C, and a reaction was performed for 25 hours while distilling off the mixture of ethylene glycol and ethylene carbonate produced. Further, the pressure in the flask was reduced to 12 kPa, and the reaction was performed at 175°C for further 15 hours while distilling off the diol and ethylene carbonate. To the flask, 0.33 g of 2-ethylhexyl acid phosphate was then added as a phosphorus compound, and the mixture in the flask was heated at 120°C for 5 hours to obtain a polycarbonate diol. The analysis results of the polycarbonate diol produced are shown in Table 1. The polycarbonate diol is abbreviated to PC-16.

[Table 1]

| | Hydroxy value (mg-KOH/g) | Characteristics | Ti content (wt%) | P content (wt%) | Integrated value ratio | Terminal OH group ratio (%) | Formula (A) R | Formula (A) mol% | |
|---|---|---|---|---|---|---|---|---|---|
| Example 1 | 55.8 | Liquid state | 0.004 | 0.004 | 0.01 | 98.3 | C4 | 48 | PC-1 |
| | | | | | | | C6 | 52 | |
| Example 2 | 55.8 | Liquid state | 0.004 | 0.004 | 0.04 | 98.3 | C4 | 48 | PC-2 |
| | | | | | | | C6 | 52 | |
| Example 3 | 55.8 | Liquid state | 0.004 | 0.004 | 0.28 | 98.4 | C4 | 48 | PC-3 |
| | | | | | | | C6 | 52 | |
| Example 4 | 55.8 | Liquid state | 0.004 | 0.004 | 0.87 | 98.4 | C4 | 48 | PC-4 |
| | | | | | | | C6 | 52 | |
| Example 5 | 56.6 | Solid state | 0.008 | 0.008 | 0.10 | 99.1 | C4 | 2 | PC-5 |
| | | | | | | | C6 | 98 | |
| Example 6 | 56.8 | Solid state | 0.008 | 0.008 | 0.10 | 99.1 | C4 | 21 | PC-6 |
| | | | | | | | C6 | 79 | |
| Example 7 | 56.6 | Liquid state | 0.008 | 0.008 | 0.10 | 99.3 | C4 | 33 | PG-7 |
| | | | | | | | C6 | 67 | |
| Example 8 | 56.3 | Liquid state | 0.009 | 0.009 | 0.10 | 99.4 | C4 | 71 | PC-8 |
| | | | | | | | C6 | 29 | |
| Example 9 | 56.7 | Solid state | 0.010 | 0.009 | 0.10 | 99.5 | C4 | 81 | PC-9 |
| | | | | | | | C6 | 19 | |
| Example 10 | 300 | Liquid state | 0.006 | 0.006 | 0.07 | 98.9 | C4 | 69 | PC-10 |
| | | | | | | | MPD | 31 | |
| Example 11 | 138 | Liquid state | 0.006 | 0.006 | 0.07 | 99.0 | C4 | 69 | PC-11 |
| | | | | | | | MPD | 31 | |
| Example 12 | 57.1 | Liquid state | 0.007 | 0.007 | 0.07 | 99.2 | C4 | 69 | PC-12 |
| | | | | | | | MPD | 31 | |

(continued)

| | Hydroxy value (mg-KOH/g) | Characteristics | Ti content (wt%) | P content (wt%) | Integrated value ratio | Terminal OH group ratio (%) | Formula (A) | | |
|---|---|---|---|---|---|---|---|---|---|
| | | | | | | | R | mol% | |
| Example 13 | 30.4 | Liquid state | 0.007 | 0.007 | 0.07 | 99.2 | C4 | 69 | PC-13 |
| | | | | | | | MPD | 31 | |
| Example 14 | 38.2 | Liquid state | 0.007 | 0.007 | 0.53 | 99.3 | C4 | 51 | PC-14 |
| | | | | | | | C5 | 49 | |
| Example 15 | 57.3 | Liquid state | 0.050 | 0.005 | 0.38 | 98.1 | C5 | 67 | PC-15 |
| | | | | | | | C12 | 33 | |
| Example 16 | 55.7 | Liquid state | 0.050 | 0.005 | 0.17 | 99.1 | C5 | 50 | PC-16 |
| | | | | | | | C6 | 50 | |
| Comparative Example 1 | 55.8 | Liquid state | 0.004 | 0.004 | ND | 98.4 | C4 | 48 | PC-21 |
| | | | | | | | C6 | 52 | |
| Comparative Example 2 | 55.8 | Liquid state | 0.004 | 0.004 | 1.23 | 98.3 | C4 | 48 | PC-22 |
| | | | | | | | C6 | 52 | |

* In Table 1, C4, C5, C6, and C12 represent $(CH_2)_4$, $(CH_2)_5$, $(CH_2)_6$, and $(CH_2)_{12}$, respectively, in this order, and MPD represents $(CH_2)_2CH(CH_3)(CH_2)_2$.
* Integrated value ratio written as ND means that no signals were detected in the range of 2.43 to 2.50 ppm.

[Application Example 1]

In a reaction container having a reflux condenser, a thermometer, and a stirring device, 200 g of polycarbonate diol PC-1, 66.2 g of isophorone diisocyanate, 23.3 g of dimethylol propionic acid neutralized with triethylamine, and 700 g of methyl ethyl ketone (MEK) were placed, and a reaction was performed at 50°C for 2 hours to obtain a urethane prepolymer having an isocyanate at the terminal. After the temperature of the reaction container was adjusted to 30°C, 640 g of distilled water was added to the urethane prepolymer at a rate of 20 g/min while stirring, so that an emulsion of the urethane prepolymer solution was obtained. Further, in the reaction container, 23.8 g of 20 wt% aqueous solution of ethylene diamine was added as a chain extender while stirring over 30 minutes. The temperature in the reaction container was then adjusted to 40°C, and the reaction was performed for further 30 minutes. After the reflux condenser tube was replaced with a simple distillation device, the MEK as a solvent was distilled off while raising the internal temperature of the reaction container to 80°C under reduced pressure over 3 hours, so that a water-dispersed polyurethane resin with a solid content of about 30 wt% was obtained.

To the water-dispersed polyurethane resin, 0.2 wt% of a leveling agent (BYK-331, manufactured by BYK) and 0.2 wt% of an anti-settling agent (DISPARLON AQ-002, manufactured by Kusumoto Chemicals, Ltd.) were added to make a surface treatment agent. To the surface of a commercially available polyurethane resin-based synthetic leather (black color), the surface treatment agent described above was applied with a bar coater so as to have a film thickness of 5 to 6 μm after drying, left standing at room temperature for 20 hours, and then dried at 150°C for 1 minute. Further, the coated leather was cured in a thermostat chamber at 23°C and 50% RH for 7 days for use in evaluation. The evaluation results are shown in Table 2.

[Application Examples 2 to 15]

A water-dispersed polyurethane resin was prepared in the same manner as in Application Example 1 except that PC-2 to PC-15 were used as a polycarbonate diol, to perform the surface treatment of synthetic leather. In the case of using PC-13, however, no water-dispersed polyurethane having an intended particle diameter was obtained due to increased viscosity of the prepolymer. The physical properties were evaluated using the synthetic leather, and the evaluation results are shown in Table 2.

[Comparative Application Examples 1 and 2]

A water-dispersed polyurethane resin was prepared in the same manner as in Application Example 1 except that PC-21 and PC-22 were used as a polycarbonate diol, to perform the surface treatment of synthetic leather. The physical properties were evaluated using the synthetic leather, and the evaluation results are shown in Table 2.

[Table 2]

| | Polycarbonate diol for use | Abrasion resistance | Change in abrasion resistance | Perspiration resistance |
|---|---|---|---|---|
| Application Example 1 | PC-1 | 1 | 0 | 0 |
| Application Example 2 | PC-2 | 0 | 0 | 0 |
| Application Example 3 | PC-3 | 0 | 0 | 0 |
| Application Example 4 | PC-4 | 0 | 0 | 1 |
| Appl ication Example 5 | PC-5 | 1 | 0 | 2 |
| Appl ication Example 6 | PC-6 | 0 | 0 | 1 |
| Appl ication Example 7 | PC-7 | 0 | 0 | 0 |
| Appl ication Example 8 | PC-8 | 0 | 0 | 0 |
| Appl ication Example 9 | PC-9 | 0 | 0 | 0 |

(continued)

| | Polycarbonate diol for use | Abrasion resistance | Change in abrasion resistance | Perspiration resistance |
|---|---|---|---|---|
| Appl ication Example 10 | PC-10 | 0 | 0 | 0 |
| Appl ication Example 11 | PC-11 | 0 | 0 | 0 |
| Appl ication Example 12 | PC-12 | 0 | 0 | 0 |
| Appl ication Example 14 | PC-14 | 0 | 0 | 1 |
| Appl ication Example 15 | PC-15 | 1 | 0 | 2 |
| Comparative Application Example 1 | PC-21 | 2 | 1 | 1 |
| Comparative Application Example 2 | PC-22 | 0 | 2 | 2 |

[Application Example 16]

In a reaction container having a stirring device, a thermometer, and a condenser tube, 200 g of PC-1 obtained in Example 1, 34 g of hexamethylene diisocyanate, and 0.02 g of dibutyltin dilaurate as a catalyst were placed, and a reaction was performed at 70°C for 5 hours to obtain a urethane prepolymer having a terminal isocyanate (NCO) group. To the prepolymer, 600 g of dimethylformamide was added as a solvent to obtain a solution. To the solution obtained, 17 g of isophorone diamine as a chain extender was then added and stirred at 35°C for 1 hour to obtain a polyurethane resin solution. The polyurethane resin solution obtained was spread on a glass plate, left standing at room temperature for 30 minutes for removal of the solvent, and then dried in a dryer at 100°C for 2 hours to obtain a polyurethane film. The physical properties were evaluated using the polyurethane film, and the evaluation results are shown in Table 3.

[Application Examples 17 to 31]

Polyurethane films were obtained in the same manner as in Application Example 16 except that PC-2 to PC-16 were used as a polycarbonate diol. The physical properties were evaluated using the polyurethane films, and the evaluation results are shown in Table 3.

[Comparative Application Examples 3 and 4]

Polyurethane films were obtained in the same manner as in Application Example 16 except that PC-21 and PC-22 were used as a polycarbonate diol. The physical properties were evaluated using the polyurethane films, and the evaluation results are shown in Table 3.

[Application Example 32]

In a reaction container having a stirring device, a thermometer, and a condenser tube, 200 g of PC-3 obtained in Example 3, 53 g of dicyclohexylmethane-4,4'-diisocyanate, and 0.02 g of dibutyltin dilaurate as a catalyst were placed, and a reaction was performed at 70°C for 3 hours to obtain a urethane prepolymer having a terminal isocyanate (NCO) group. To the prepolymer, 600 g of dimethylformamide was added as a solvent to obtain a solution. To the solution obtained, 17 g of isophorone diamine as a chain extender was then added and stirred at 35°C for 1 hour to obtain a polyurethane resin solution. The polyurethane resin solution obtained was spread on a glass plate, left standing at room temperature for 30 minutes for removal of the solvent, and then dried in a dryer at 100°C for 2 hours to obtain a polyurethane film. Using the polyurethane film, the flexibility of the polyurethane was evaluated and was 1.1 MPa.

[Application Example 33]

A polyurethane film was obtained in the same manner as in Application Example 32 except that PC-7 was used as a polycarbonate diol. Using the polyurethane film, the flexibility of the polyurethane was evaluated and was 1.3 MPa.

[Application Example 34]

A polyurethane film was obtained in the same manner as in Application Example 32 except that PC-8 was used as a polycarbonate diol. Using the polyurethane film, the flexibility of the polyurethane was evaluated and was 1.4 MPa.

[Application Example 35]

A polyurethane film was obtained in the same manner as in Application Example 32 except that PC-12 was used as a polycarbonate diol. Using the polyurethane film, the flexibility of the polyurethane was evaluated and was 1.8 MPa.

[Application Example 36]

A polyurethane film was obtained in the same manner as in Application Example 32 except that PC-14 was used as a polycarbonate diol. Using the polyurethane film, the flexibility of the polyurethane was evaluated and was 1.4 MPa.

[Application Example 37]

A polyurethane film was obtained in the same manner as in Application Example 32 except that PC-16 was used as a polycarbonate diol. Using the polyurethane film, the flexibility of the polyurethane was evaluated and was 1.1 MPa.

[Comparative Application Example 5]

A polyurethane film was obtained in the same manner as in Application Example 32 except that PC-21 was used as a polycarbonate diol. Using the polyurethane film, the flexibility of the polyurethane was evaluated and was 1.4 MPa.

[Table 3]

| | Polycarbonate diol for use | Hot water resistance | Perspiration resistance |
|---|---|---|---|
| Appl ication Example 16 | PC-1 | 98 | 0 |
| Appl ication Example 17 | PC-2 | 97 | 0 |
| Appl ication Example 18 | PC-3 | 98 | 0 |
| Appl ication Example 19 | PC-4 | 95 | 1 |
| Appl ication Example 20 | PC-5 | 97 | 2 |
| Appl ication Example 21 | PC-6 | 97 | 1 |
| Appl ication Example 22 | PC-7 | 98 | 0 |
| Appl ication Example 23 | PC-8 | 97 | 0 |
| Appl ication Example 24 | PC-9 | 97 | 0 |
| Appl ication Example 25 | PC-10 | 97 | 0 |
| Appl ication Example 26 | PC-11 | 96 | 0 |
| Appl ication Example 27 | PC-12 | 96 | 0 |
| Appl ication Example 28 | PC-13 | 97 | 0 |
| Appl ication Example 29 | PC-14 | 97 | 1 |

(continued)

| | Polycarbonate diol for use | Hot water resistance | Perspiration resistance |
|---|---|---|---|
| Appl ication Example 30 | PC-15 | 98 | 2 |
| Appl ication Example 31 | PC-16 | 98 | 1 |
| Comparative Application Example 3 | PC-21 | 98 | 0 |
| Comparative Application Example 4 | PC-22 | 90 | 2 |

Industrial Applicability

The polycarbonate diol of the present invention can exhibit moist heat resistance and perspiration resistance in addition to excellent abrasion resistance, when used as a constituent material of surface treatment agents for synthetic leather or artificial leather and film coating agents. Having these properties, the polycarbonate diol of the present invention can be suitably used as a constituent material of surface treatment agents for synthetic leather or artificial leather and film coating agents.

## Claims

1. A polycarbonate diol comprising a repeating unit represented by the following formula (A) and a terminal hydroxyl group, wherein the polycarbonate diol has an integrated value of signals at 2.43 to 2.50 ppm of 0.01 to 1.0 relative to an integrated value of signals at 3.90 to 4.45 ppm taken as 1000 in a $^1$H-NMR spectrum measured using deuterated chloroform as a solvent and tetramethylsilane as a reference material, wherein the integrated value of signals is determined as described in "1. Determination of integrated value ratio of polycarbonate diol ($^1$H-NMR)" in the description:

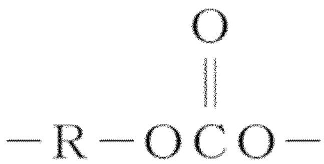

(A)

wherein R represents a divalent aliphatic or alicyclic hydrocarbon having 3 to 15 carbon atoms, and a plurality of R may be the same or different in all the repeating units.

2. The polycarbonate diol according to claim 1, wherein 10 to 100 mol% of the repeating unit represented by formula (A) is a repeating unit represented by the following formula (B):

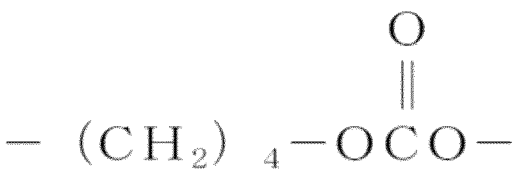

(B)

3. The polycarbonate diol according to claim 1 or 2, having a hydroxy value of 32 to 280 mg-KOH/g measured by the neutralization titration method specified in JIS K0070 (1992).

4. The polycarbonate diol according to any one of claims 1 to 3, wherein the repeating unit represented by formula (A) comprises a repeating unit represented by the following formula (B) and a repeating unit represented by the following formula (C):

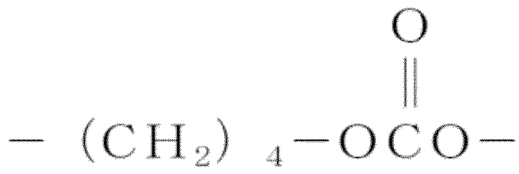

(B)

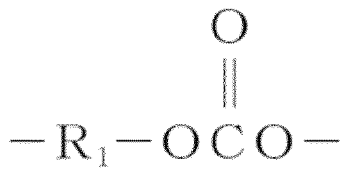

(C)

wherein $R_1$ represents a divalent unbranched aliphatic hydrocarbon having 3 to 6 carbon atoms other than $(CH_2)_4$ derived from 1,4-butane diol, and a plurality of $R_1$ may be the same or different.

**5.** A coating composition comprising the polycarbonate diol according to any one of claims 1 to 4 and an organic polyisocyanate.

**6.** A coating composition comprising a urethane prepolymer as a reaction product of the polycarbonate diol according to any one of claims 1 to 4 and an organic polyisocyanate, the urethane prepolymer having a terminal isocyanate group.

**7.** A coating composition comprising a polyurethane resin as a reaction product of the polycarbonate diol according to any one of claims 1 to 4, an organic polyisocyanate, and a chain extender.

**8.** An aqueous coating composition comprising a polyurethane resin as a reaction product of the polycarbonate diol according to any one of claims 1 to 4, an organic polyisocyanate, and a chain extender.

**9.** A surface treatment agent comprising the polycarbonate diol according to any one of claims 1 to 4 and an organic polyisocyanate.

**10.** A surface treatment agent comprising a urethane prepolymer as a reaction product of the polycarbonate diol according to any one of claims 1 to 4 and an organic polyisocyanate, the urethane prepolymer having a terminal isocyanate group.

**11.** A surface treatment agent comprising a polyurethane resin as a reaction product of the polycarbonate diol according to any one of claims 1 to 4, an organic polyisocyanate, and a chain extender.

**12.** An aqueous surface treatment agent comprising a polyurethane resin as a reaction product of the polycarbonate diol according to any one of claims 1 to 4, an organic polyisocyanate, and a chain extender.

**13.** A thermoplastic polyurethane as a reaction product of the polycarbonate diol according to any one of claims 1 to 4 and an organic polyisocyanate.

## Patentansprüche

**1.** Polycarbonatdiol, umfassend eine durch die folgende Formel (A) dargestellte Wiederholungseinheit und eine endständige Hydroxylgruppe, wobei das Polycarbonatdiol einen integrierten Wert der Signale bei 2,43 bis 2,50 ppm von 0,01 bis 1,0 relativ zu einem integrierten Wert der Signale bei 3,90 bis 4,45 ppm aufweist, der als 1000 herangezogen wird, in einem $^1$H-NMR-Spektrum, welches unter Verwendung von deuteriertem Chloroform als Lösungsmittel und Tetramethylsilan als Referenzmaterial gemessen wird, wobei der integrierte Wert der Signale wie in "1. Bestimmung des Verhältnissen der integrierten Werte von Polycarbonatdiol ($^1$H-NMR)" in der Beschreibung beschrieben bestimmt wird:

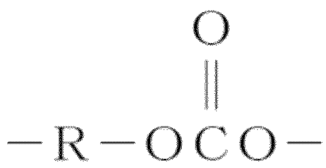 (A)

wobei R einen zweiwertigen aliphatischen oder alicyclischen Kohlenwasserstoff mit 3 bis 15 Kohlenstoffatomen darstellt und eine Vielzahl von R in allen Wiederholungseinheiten gleich oder verschieden sein kann.

2. Polycarbonatdiol nach Anspruch 1, wobei 10 bis 100 Mol-% der durch die Formel (A) dargestellten Wiederholungseinheit eine durch die folgende Formel (B) dargestellte Wiederholungseinheit ist:

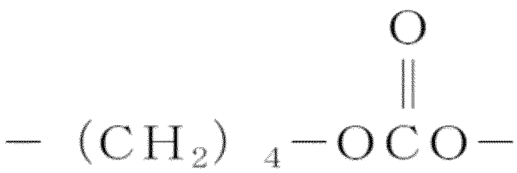 (B)

3. Polycarbonatdiol nach Anspruch 1 oder 2 mit einer Hydroxylzahl von 32 bis 280 mg KOH/g, welche durch die in JIS K0070 (1992) spezifizierte Neutralisationstitrationsmethode gemessen wird.

4. Polycarbonatdiol nach einem der Ansprüche 1 bis 3, wobei die durch die Formel (A) dargestellte Wiederholungseinheit eine durch die folgende Formel (B) dargestellte Wiederholungseinheit und eine durch die folgende Formel (C) dargestellte Wiederholungseinheit umfasst:

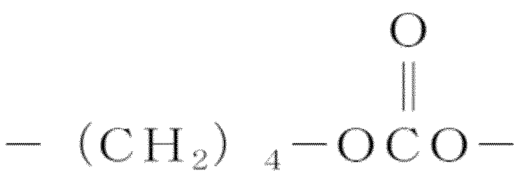 (B)

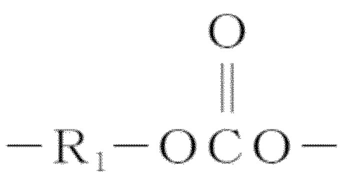 (C)

wobei $R_1$ einen anderen zweiwertigen, unverzweigten aliphatischen Kohlenwasserstoff mit 3 bis 6 Kohlenstoffatomen als das von 1,4-Butandiol stammende $(CH_2)_4$ darstellt, und eine Vielzahl von $R_1$ gleich oder verschieden sein kann.

5. Beschichtungszusammensetzung, umfassend das Polycarbonatdiol nach einem der Ansprüche 1 bis 4 und ein organisches Polyisocyanat.

6. Beschichtungszusammensetzung, umfassend ein Urethan-Prepolymer als Reaktionsprodukt des Polycarbonatdiols nach einem der Ansprüche 1 bis 4 und eines organischen Polyisocyanats, wobei das Urethan-Prepolymer eine endständige Isocyanatgruppe aufweist.

7. Beschichtungszusammensetzung, umfassend ein Polyurethanharz als Reaktionsprodukt des Polycarbonatdiols nach einem der Ansprüche 1 bis 4, eines organischen Polyisocyanat und eines Kettenverlängungsmittels.

8. Wässrige Beschichtungszusammensetzung, umfassend ein Polyurethanharz als Reaktionsprodukt des Polycarbonatdiols nach einem der Ansprüche 1 bis 4, eines organischen Polyisocyanats und einen Kettenverlängerungsmittels.

9. Oberflächenbehandlungsmittel, umfassend das Polycarbonatdiol nach einem der Ansprüche 1 bis 4 und ein organisches Polyisocyanat.

**10.** Oberflächenbehandlungsmittel, umfassend ein Urethan-Prepolymer als Reaktionsprodukt des Polycarbonatdiols nach einem der Ansprüche 1 bis 4 und eines organischen Polyisocyanats, wobei das Urethan-Prepolymer eine endständige Isocyanatgruppe aufweist.

**11.** Oberflächenbehandlungsmittel, umfassend ein Polyurethanharz als Reaktionsprodukt des Polycarbonatdiols nach einem der Ansprüche 1 bis 4, eines organischen Polyisocyanats und eines Kettenverlängerungsmittels.

**12.** Wässriges Oberflächenbehandlungsmittel, umfassend ein Polyurethanharz als Reaktionsprodukt des Polycarbonatdiols nach einem der Ansprüche 1 bis 4, eines organischen Polyisocyanats und eines Kettenverlängerungsmittels.

**13.** Thermoplastisches Polyurethan als Reaktionsprodukt des Polycarbonatdiols nach einem der Ansprüche 1 bis 4 und eines organischen Polyisocyanats.

## Revendications

**1.** Polycarbonate diol comprenant un motif répétitif représenté par la formule (A) suivante et un groupe hydroxyle terminal, dans lequel le polycarbonate diol a une valeur intégrée des signaux à 2,43 à 2,50 ppm de 0,01 à 1,0 par rapport à une valeur intégrée des signaux à 3,90 à 4,45 ppm considérée comme étant de 1 000 dans un spectre $^1$H-RMN mesuré en utilisant du chloroforme deutéré en tant que solvant et du tétraméthylsilane en tant que matériau de référence, dans lequel la valeur intégrée des signaux est déterminée tel que décrit dans « 1. Détermination du rapport de valeurs intégrées du polycarbonate diol ($^1$H-RMN) » dans la description :

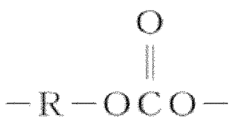

(A)

dans lequel R représente un hydrocarbure divalent aliphatique ou alicyclique comportant de 3 à 15 atomes de carbone, et une pluralité de R peuvent être identiques ou différents dans tous les motifs répétitifs.

**2.** Polycarbonate diol selon la revendication 1, dans lequel 10 à 100 % en mol du motif répétitif représenté par la formule (A) est un motif répétitif représenté par la formule (B) suivante :

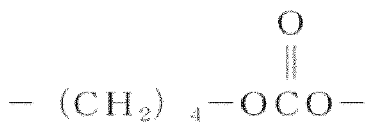

(B) .

**3.** Polycarbonate diol selon la revendication 1 ou 2, ayant un indice d'hydroxyle de 32 à 280 mg-KOH/g mesuré par le procédé de titrage par neutralisation spécifié dans JIS K0070 (1992).

**4.** Polycarbonate diol selon l'une quelconque des revendications 1 à 3, dans lequel le motif répétitif représenté par la formule (A) comprend un motif répétitif représenté par la formule (B) suivante et un motif répétitif représenté par la formule (C) suivante :

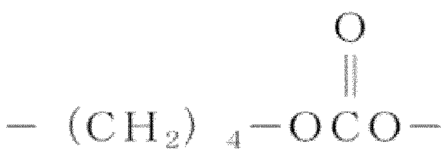

(B)

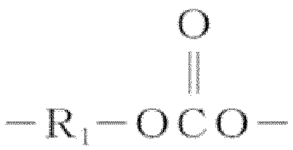

(C)

dans lequel $R_1$ représente un hydrocarbure aliphatique non ramifié divalent comportant de 3 à 6 atomes de carbone autre que $(CH_2)_4$ dérivé du 1,4-butane diol, et une pluralité de $R_1$ peuvent être identiques ou différents.

**5.** Composition de revêtement comprenant le polycarbonate diol selon l'une quelconque des revendications 1 à 4 et un polyisocyanate organique.

**6.** Composition de revêtement comprenant un prépolymère d'uréthane en tant que produit réactionnel du polycarbonate diol selon l'une quelconque des revendications 1 à 4 et d'un polyisocyanate organique, le prépolymère d'uréthane comportant un groupe isocyanate terminal.

**7.** Composition de revêtement comprenant une résine de polyuréthane en tant que produit réactionnel du polycarbonate diol selon l'une quelconque des revendications 1 à 4, d'un polyisocyanate organique, et d'un allongeur de chaîne.

**8.** Composition de revêtement aqueuse comprenant une résine de polyuréthane en tant que produit réactionnel du polycarbonate diol selon l'une quelconque des revendications 1 à 4, d'un polyisocyanate organique, et d'un allongeur de chaîne.

**9.** Agent de traitement de surface comprenant le polycarbonate diol selon l'une quelconque des revendications 1 à 4 et un polyisocyanate organique.

**10.** Agent de traitement de surface comprenant un prépolymère d'uréthane en tant que produit réactionnel du polycarbonate diol selon l'une quelconque des revendications 1 à 4 et d'un polyisocyanate organique, le prépolymère d'uréthane comportant un groupe isocyanate terminal.

**11.** Agent de traitement de surface comprenant une résine de polyuréthane en tant que produit réactionnel du polycarbonate diol selon l'une quelconque des revendications 1 à 4, d'un polyisocyanate organique, et d'un allongeur de chaîne.

**12.** Agent de traitement de surface aqueux comprenant une résine de polyuréthane en tant que produit réactionnel du polycarbonate diol selon l'une quelconque des revendications 1 à 4, d'un polyisocyanate organique, et d'un allongeur de chaîne.

**13.** Polyuréthane thermoplastique en tant que produit réactionnel du polycarbonate diol selon l'une quelconque des revendications 1 à 4 et d'un polyisocyanate organique.

FIGURE 1

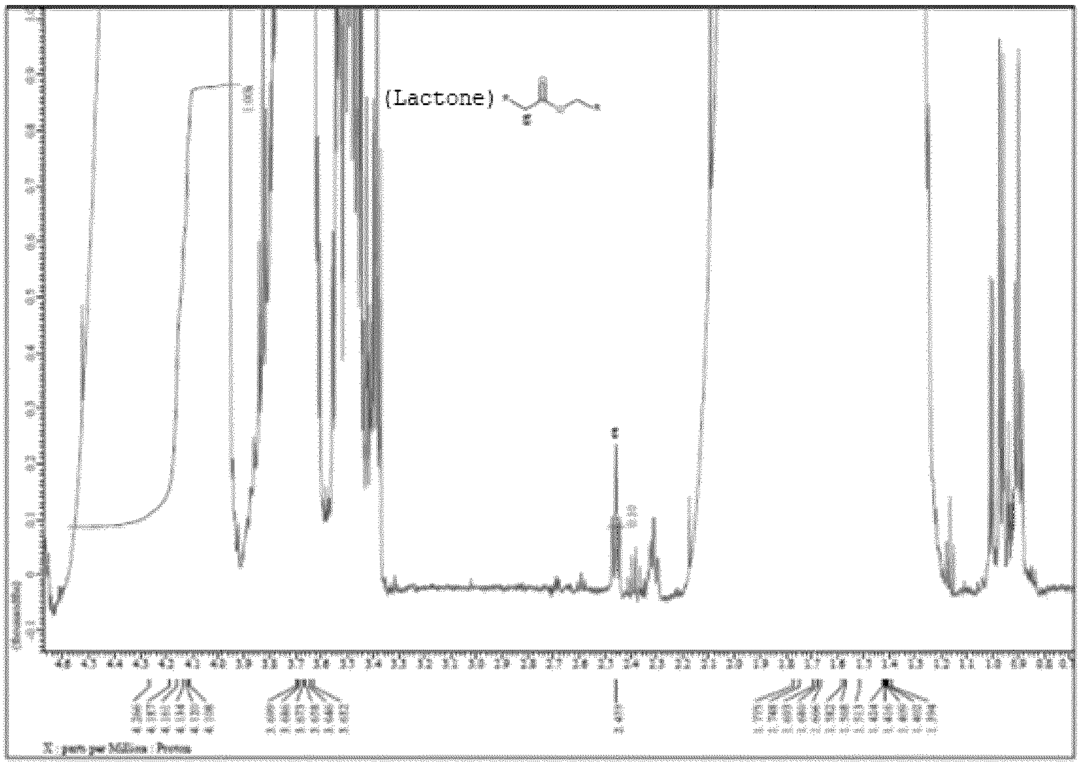

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016039395 A
- JP 2016044240 A
- WO 2010041408 A
- US 5070173 A


### Non-patent literature cited in the description


- Collection of material selection, structure control and modification of polyurethane. Technical Information Institute Co., Ltd, 2014, 58-59
- **SCHNELL.** *Polymer Reviews,* 1994, vol. 9, 9-20